# EUROPÄISCHE PATENTANMELDUNG

(11) **EP 1 795 890 A1**
(43) Veröffentlichungstag der Anmeldung: **13.06.2007**
(21) Anmeldenummer: 06077169.8
(22) Anmeldetag: 05.12.2006
(51) Int. Cl.: G01N 29/22, G01N 29/26, G01N 29/44, G01N 29/38

(54) **Verfahren und Vorrichtung zur Ultraschalldetektion von Diskontinuitäten in einem Materialbereich**

(30) Priorität: 06.12.2005 EP 05090331
(71) Anmelder: BAM Bundesanstalt für Materialforschung und -prüfung, 12205 Berlin (DE)
(72) Erfinder: Heckel, Thomas, 12205 Berlin (DE); Schenk, Gottfried, 14129 Berlin (DE); Erhard, Anton Dr., 12307 Berlin (DE); Brekow, Gerhard Dr., 12207 Berlin (DE)
(74) Vertreter: Pfenning, Meinig & Partner GbR

(57) **Zusammenfassung**

Es wird ein Verfahren und eine Vorrichtung zum Detektieren von Diskontinuitäten in einem Materialbereich mit mindestens einem, mehrere Ultraschall-Schwingerelemente aufweisenden Prüfkopf und eine Auswerte- und Steuereinrichtung vorgeschlagen, bei denen die Schwingerelemente schräg in einem Winkel zur Oberfläche des Materialbereichs angeordnet sind und derart über Verzögerungselemente angesteuert werden, dass ein defokussierendes Schallfeld eingestrahlt wird. Die Empfangssignale der Schwingerelemente werden einer Mehrzahl von Auswertemodulen zur parallelen und zeitgleichen Weiterverarbeitung für unterschiedliche Winkelwerte oder Winkelbereiche zugeführt, wobei die Anzahl der Auswertemodule den unterschiedlichen Winkelwerten oder -bereichen entspricht.

## Beschreibung

Die Erfindung betrifft ein Verfahren und eine Vorrichtung zum Detektieren von Diskontinuitäten in einem Materialbereich nach dem Oberbegriff des Hauptanspruchs.

Für die Überprüfung von Werkstücken oder Materialbereichen ist die Ultraschalltechnik allgemein bekannt. Dabei wird mittels einer Sonde Ultraschall in das Material eingestrahlt und die Reflexion erfasst und ausgewertet. Für die Überprüfung von Schienen mit Ultraschall werden eine Mehrzahl von Prüfköpfen verwendet, die auf die Schienenstränge aufgesetzt werden, wobei ein Koppelmittel, üblicherweise Wasser für die Ankopplung der Prüfköpfe an die Schiene verwendet wird. Die Prüfköpfe strahlen mit jeweils unterschiedlichen Winkeln in die Schiene ein und die entsprechenden Reflexionen werden erfasst und ausgewertet.

Bei einem zurzeit angesetzten Schienenprüfzug wird die Prüfung mit Hilfe von jeweils 9 Prüfköpfen für 0°, ±20°, ±35° und 2x ±70° durchgeführt. Es besteht jedoch Verbesserungsbedarf bezüglich der Erweiterung der Prüfkopffunktionen durch ein zusätzlich Prüfkopfpaar von ±55°. Weiterhin wird die Reduzierung des Verbrauchs an Koppelmittel für notwendig erachtet, was jedoch der angeführten Prüfkopferweiterung entgegensteht. Auch eine Beschleunigung der Auswertung wird als wünschenswert angesehen. Die prüftechnische Umsetzung dieser Entwicklungsziele stößt beim Einsatz der konventionellen Prüftechnik jedoch auf Grenzen, denn diese ist starr, d.h. sie kann nur durch mechanische Umrüstung auf unterschiedliche Streckenprofile, d.h. Schienenhöhe eingestellt werden, wie sie durch die unterschiedlichen nationalen Schienennetze gegeben sind. Eine Erhöhung der Zahl der verwendeten Prüfköpfe zur Umgehung dieses Problems ist insofern problematisch, als dies, wie schon erwähnt, einen größeren Bedarf an Koppelmittel zur Folge hätte, was vor allem bei längeren Fahrstrecken des Prüfzuges zu Bevorratungsproblemen führt. Auch eine optimale, d.h. flexible Anpassung der Einschallwinkel an die Prüfgegebenheiten wäre nur durch eine drastische Erhöhung der eingesetzten Prüfköpfe möglich, was zu den gleichen Problemen führt.

Eine technische realisierbare Lösung bestünde in der Verwendung von elektronisch gesteuerten Prüfköpfen, wie sie in der Gruppenstrahler- oder Phased-Array-Technik zum Einsatz kommen. Sie würde pro Schienenstrang und Fahrtrichtung jeweils nur einen Prüfkopf erforderlich machen und die programmgesteuerte Einstellung der geforderten Winkel ermöglichen. Eine solche Technik, die bereits seit vielen Jahren in der zerstörungsfreien Prüfung mit Ultraschall zum Einsatz kommt und sich insbesondere bei der Lösung von komplexen Prüfaufgaben bewährt hat, erlaubt eine optimale Anpassung der Schallfeldparameter wie Einschallwinkel und Fokustiefe auf elektronischem Wege. Durch die Reduzierung der Prüfköpfe auf jeweils nur einen Gruppenstrahler-Prüfkopf pro Schiene und Richtung würde darüber hinaus eine erhebliche Einsparung von Koppelmitteln erreicht werden. Aus gerätetechnischer Sicht besteht hierbei jedoch die Herausforderung, die zurzeit geforderten Winkeleinstellungen (z.B. 0°, ±35°, ±55°, ±70°) innerhalb der Fahrgeschwindigkeit des Zuges (maximal 100 km/h) mit der geforderten Auflösung (3 mm) vorzunehmen. Dies ist mit einem zeitsequentiellen Winkeldurchlauf, wie er in der Gruppenstrahlertechnik üblich ist nicht möglich, da dieser eine maximale Fahrgeschwindigkeit von weniger als 10 km/h zur Folge hätte. Eine hohe Fahrgeschwindigkeit ist jedoch wegen der Notwendigkeit zur Einpassung an die Taktzeiten des Schienenverkehrs, vor allem bei Hauptverkehrs-Fahrstrecken, unerlässlich.

Der Erfindung liegt daher die Aufgabe zugrunde, ein Verfahren und eine Vorrichtung zum Detektieren von Diskontinuitäten in einem Materialbereich zur Verfügung zu stellen, bei denen trotz erhöhter relativer Geschwindigkeit (70 km/h bis 100 km/h) zwischen Materialbereich und Ultraschall-Schwingerelemente eine genaue Prüfung in mehreren Winkelbereichen und eine schnelle entsprechende Auswertung möglich ist.

Diese Aufgabe wird erfindungsgemäß durch die kennzeichnenden Merkmale des Verfahrens- und des Vorrichtungsanspruchs in Verbindung mit den Merkmalen des jeweiligen Oberbegriffs gelöst.

Dadurch, dass der Prüfkopf Ultraschall-Schwingerelemente aufweist, die derart angeordnet und angesteuert werden, dass ein defokussierendes Schallfeld in das Material eingestrahlt wird, wobei die Schwingerelemente schräg in einem Winkel zur Oberfläche des Materials angeordnet sind und zur Ansteuerung Verzögerungselemente verwendet werden, und dadurch, dass die Empfangssignale der Elemente parallel und zeitgleich an eine Mehrzahl von Auswertemodulen zugeführt werden, in denen eine Auswertung der Empfangssignale richtungsselektiv, d.h. jeweils für unterschiedliche Winkelwerte oder Winkelbereiche vorgenommen wird, wobei die Anzahl der Auswertemodule den unterschiedlichen Winkelwerten- oder -bereichen entspricht, wird ein Prüfsystem zur Verfügung gestellt, das auch bei hohen Relativgeschwindigkeiten zwischen Prüfkopf und Materialbereich in Echtzeit eine Prüfung des Materialbereichs vornimmt.

Damit wird den Erfordernissen der Prüfpraxis bei einer signifikanten Erhöhung der Flexibilität, mit Hinblick auf die Anpassungsfähigkeit an unterschiedliche Schienennetze Rechnung getragen. Darüber hinaus kann ohne Erhöhung der Anzahl der eingesetzten Prüfköpfe eine Erweiterung des Winkelbereichs über den derzeit üblichen Stand hinaus realisiert werden, wenn die Anzahl der als Gruppenstrahler-Module ausgebildeten Auswertemodule pro Prüfkopf bzw. Gruppenstrahler-Einheit erweitert wird. Dies hat eine Verbesserung der Prüfaussage ohne die bei der konventionellen Technik gegebenen Nachteile wie Erhöhung des Koppelmittelverbrauchs zur Folge und führt zu einer Erhöhung der Sicherheit im schienengebundenen Verkehr.

Durch die in den Unteransprüchen angegebenen Maßnahmen sind vorteilhafte Weiterbildungen und Verbesserungen möglich.

Die Erfindung ist in der Zeichnung dargestellt und wird in der nachfolgenden Beschreibung näher erläutert. Es zeigen:
- Fig. 1: eine schematische Anordnung der Prüfköpfe der erfindungsgemäßen Vorrichtung in Bezug auf die zu prüfende Schiene,
- Fig. 2: ein Blockschaltbild einer Prüfvorrichtung für eine Schiene und eine Fahrtrichtung,
- Fig. 3: ein Blockschaltbild eines Schienenprüfsystems mit vier Prüfköpfen und entsprechender Auswertung,
- Fig. 4: ein prinzipieller Aufbau eines Schienenprüfzugs mit der erfindungsgemäßen Prüfvorrichtung,
- Fig. 5: ein Beispiel eines fokussierten Schallfelds,
- Fig. 6: ein Beispiel eines defokussierten Schallfeldes, und
- Fig. 7: ein weiteres Blockschaltbild der in diesem Ausführungsbeispiel beschriebenen Prüfvorrichtung.

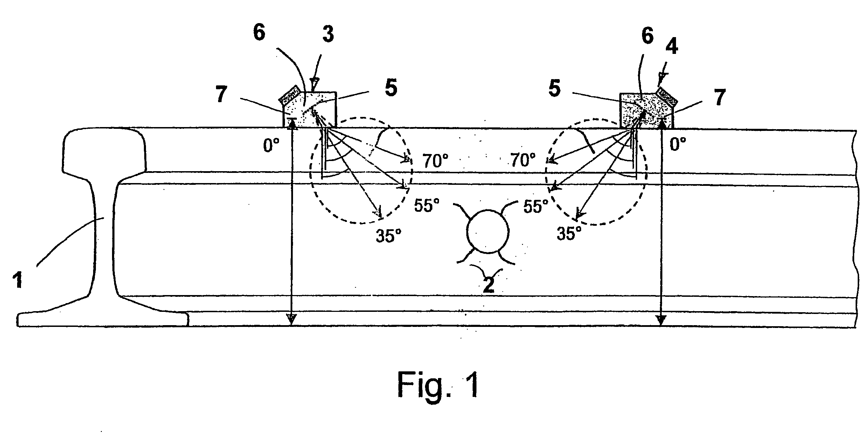

In der in Fig. 1 dargestellten schematischen Anordnung ist mit 1 eine zu prüfende Schiene dargestellt, wobei mit 2 Materialfehler, z.B. Risse, bezeichnet sind. Auf der Schiene 1 sind Prüfköpfe 3, 4 angeordnet, von denen einer in Fahrtrichtung und der andere in Gegenfahrtrichtung wirksam ist. Die Prüfköpfe 3, 4 sind als Ultraschall-Gruppenstrahler ausgebildet, deren Technik auf dem physikalischen Prinzip der Punktquellensynthese beruht. Die Einzelelemente eines Multielementschwingers werden mit Hilfe von programmierbaren Verzögerungsleitungen unterschiedlich angesteuert, so dass eine Schallfeldausbildung mit variabler Richtwirkung entsteht.

Im dargestellten Ausführungsbeispiel weist der jeweilige Prüfkopf 3, 4 eine lineare Anordnung von einer größeren Anzahl von Ultraschall-Schwingerelementen 5, z.B. 16 Elemente auf. Diese Elemente können als Piezoelemente ausgebildet sein und sie sind auf einem Vorsatzkeil 6, z.B. aus Plexiglas fest angeordnet, derart, dass eine Grundeinschallrichtung vorgegeben ist, wie aus Fig. 1 zu erkennen ist. Eine nicht dargestellte geeignete elektronische Steuerung (wie später beschrieben) der einzelnen Schwingerelemente ermöglicht eine stufenlose Variation des Einschall- und Empfangswinkels, um den durch die feste Anordnung Vorsatzkeil 6, Schwingerelemente 5 vorgegebenen Mittenwinkel sowie die Lage des Fokuspunktes. Beispielhaft sind in der Zeichnung die Winkel von 35°, 55° und 70° angegeben, die für die Prüfung vorgegeben sind.

Der jeweilige Prüfkopf 3, 4 enthält ein zusätzliches Einzelschwingerelement 7, das ebenfalls an dem Vorsatzkeil 6 befestigt ist und das parallel zur Schiene angeordnet ist und dessen Schallfeld in senkrechter Richtung orientiert ist. Dieses Element 7 dient zur Koppelkontrolle, d.h. zur Feststellung, ob zwischen Prüfkopf 3, 4 und Schiene 1, üblicherweise über ein Koppelmedium wie Wasser, eine ausreichende Einkopplung des Schallfeldes vorhanden ist. Außerdem dient es zur Detektion von horizontal orientierten Fehlern.

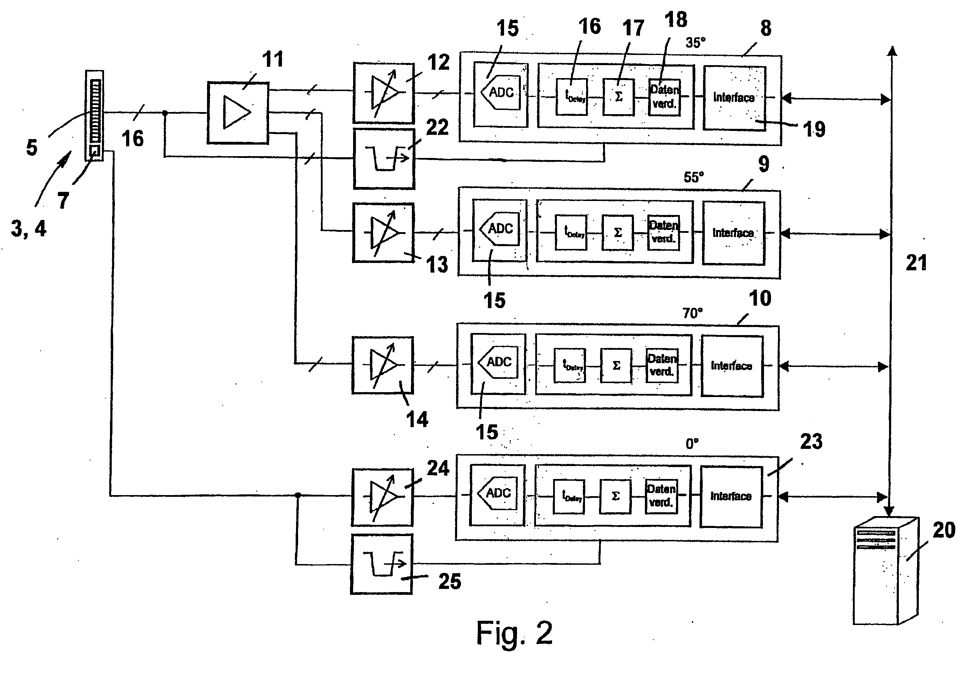

In Fig. 2 ist eine Steuerungs- und Auswerteeinrichtung für einen Prüfkopf 3, 4, d.h. für ein Gruppenstrahler-Array mit 16 Elementen 5 und dem einzelnen Schwingerelement 7 zur Koppelkontrolle abgebildet. Jedem Prüfkopf, d.h. den 16 Schwingerelementen 5 ist eine Mehrzahl von Gruppenstrahler-Modulen zugeordnet, die eine Steuerung und Auswertung vornehmen. Die Anzahl der Gruppenstrahler-Module 8, 9, 10 entspricht der Anzahl der auszuwertenden Winkelwerte bzw. Winkelbereiche. Im vorliegenden Fall sind den 16 Elementen drei Gruppenstrahler-Module 8, 9, 10 für Winkelwerte von 35°, 55° und 70° zugeordnet. Die 16 Elemente 5 sind über 16 Leitungen mit einem Vorschaltmodul 11 verbunden, der die Funktion hat, die auf den 16 Leitungen liegenden Empfangssignale jeweils zu verdreifachen und über Empfangsmodule 12, 13, 14 den jeweiligen Gruppenstrahler-Modulen 8, 9, 10 zuzuführen. Zu diesem Zwecke weist der Vorschaltmodul 11 schnelle Treiber und Entkoppelelemente auf, die die hochfrequenten Prüfkopfsignale jeweils an die Module 8 bis 10 verteilen. Die Empfangsmodule 12 bis 14, die zwischen Vorschaltmodul 11 und Gruppenstrahler-Modulen 8, 9, 10 geschaltet sind, weisen Verstärker auf, mit denen die Echosignale der Schwingerelemente 5 an die Eingangsdynamik der weiter unten angegebenen AD-Wandler 5 angepasst werden.

Jeder Gruppenstrahler-Modul 8, 9, 10 weist einen AD-Wandlerkreis 15 auf, der zur Digitalisierung der analogen Echosignale und der messtechnischen Aufbereitung der Prüfdaten dient. Weiterhin sind Baugruppen zur Verzögerungssteuerung 16, zur Empfangssummation 17 und zur Datenverdichtung 18 vorgesehen. Mit der Verzögerungssteuerung 16 werden die Prüfsignale bei den gewünschten Winkelbereichen bzw. Winkelwerten "ausgefiltert" und eine Fokussierung vorgenommen. Mit der Baugruppe zur Datenverdichtung 18 kann eine Komprimierung, eine Gleichrichtung oder eine Blendentechnik vorgenommen werden. Jeder Modul 8, 9, 10 ist mit einem Interface bzw. einer Schnittstelle 19 versehen, über die der jeweilige Modul als Client eines zentralen Steuer- und Auswerterechners 20 über eine schnelle Bus-Verbindung 21 mit diesem verbunden ist.

Wie aus der Fig. 2 zu erkennen ist, ist ein Sendemodul 22 mit dem ersten Gruppenstrahler-Modul 8 einerseits und mit den 16 Schwingerelementen 5 andererseits verbunden. Das Sendemodul 22 der Sendeleistungsstufen zur Anregung der Schwingerelemente 5 enthält liefert die Ansteuerimpulse für das Gruppenstrahler-Array mit den 16 Elementen 5, die beispielsweise als variable Rechteckimpulse von hoher Spannung, z.B. 200V ausgebildet sind und die in einer derartigen Weise gegeneinander verzögert sind, dass eine defokussierende Schallfeldausbildung entsteht, die zu einer Breitstrahl-Richtwirkung führt. Die Verzögerung für die jeweiligen Ansteuerimpulse wird von dem Gruppenstrahler-Modul 8 und hier von dem Verzögerungsbaustein 16 an den Sendemodul 22 geliefert.

Schließlich sind noch ein Gruppenstrahler-Modul 23, ein Empfangsmodul 24 und ein Sendemodul 25 vorgesehen, die zur Ansteuerung und zur Signalverarbeitung des Einzelschwingerelementes 7 dienen. Grundsätzlich haben sie den gleichen Aufbau wie die zuvor beschriebenen Module, wobei der Gruppenstrahlermodul 23 für die Signalverarbeitung für einen Winkelwert von 0° ausgebildet ist. Auch er ist über das Bussystem 21 mit dem Steuerrechner 20 verbunden.

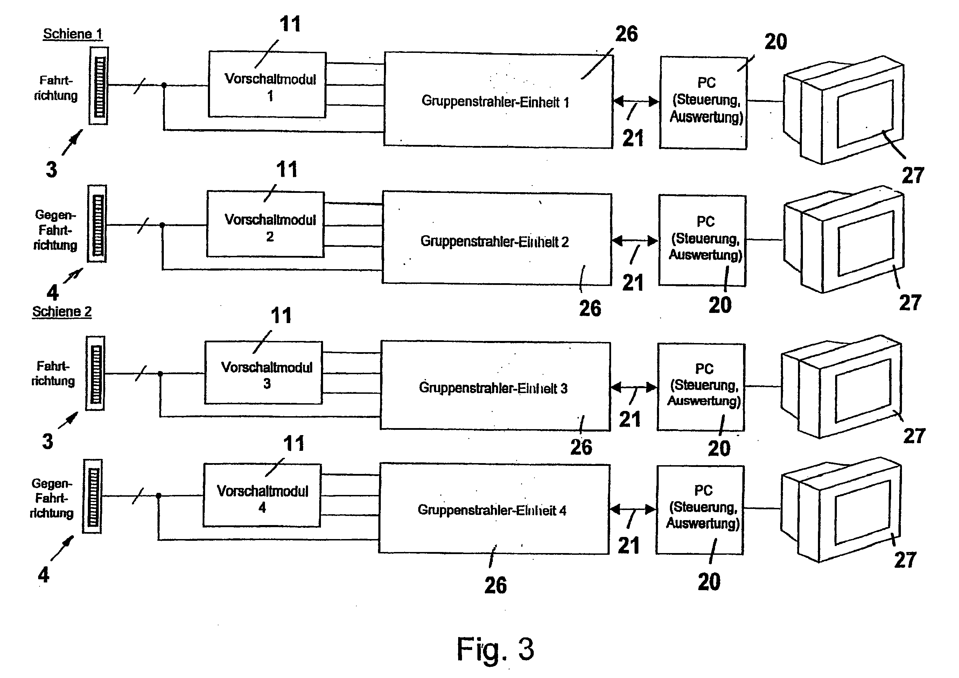

In Fig. 3 ist ein gerätetechnisches Konzept für die Schienenprüfung mit vier Gruppenstrahler-Prüfköpfen dargestellt, wobei die Prüfung auf beiden Schienenelementen durchgeführt wird. Im oberen Bereich der Figur sind die Auswerteelemente für den Prüfkopf 3, der in Fahrtrichtung ausgerichtet ist und den Prüfkopf 4, der in Gegenfahrtrichtung ausgerichtet ist, und im unteren Teil ist die gleiche Anordnung für die Schiene 2 dargestellt. Die Vorschaltmodule entsprechen denen nach Fig. 2 und sind gleichfalls mit dem Bezugszeichen 11 bezeichnet. Jedem Prüfkopf 3, 4 ist eine Gruppenstrahler-Einheit 26 zugeordnet, die sich aus den Gruppenstrahler-Modulen 8, 9, 10, 23 für die unterschiedlichen Winkelwerte sowie aus den Empfangsmodulen 12, 13, 14, 24 sowie den Sendemodulen 22, 25 für die unterschiedlichen Winkelwerte zusammensetzt. Über die jeweiligen Bussysteme 21 sind die Gruppenstrahler-Einheiten 26 mit dem jeweiligen Steuerungs- und Auswerterechner 20 mit entsprechendem Bildschirm 27 zur Darstellung der Prüfergebnisse verbunden.

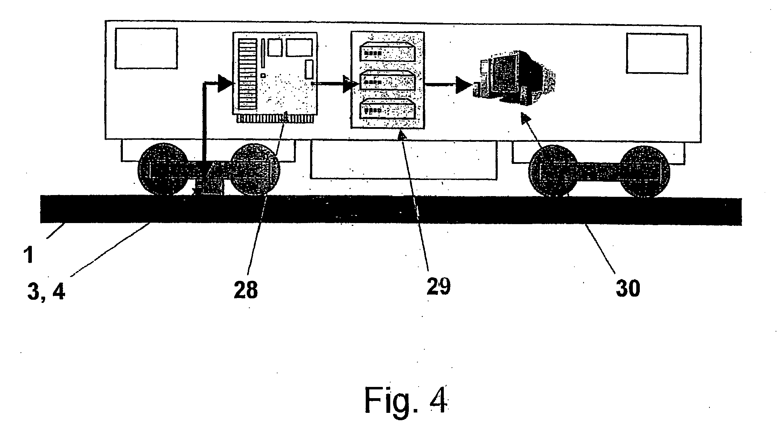

Fig. 4 zeigt einen prinzipiellen Aufbau eines Schienenprüfzugs mit Gruppenstrahlertechnik, wobei der Zug das Prüfkopfsystem bestehend aus den Prüfköpfen 3 und 4 für jede Schiene sowie den entsprechenden Zuführungen für das Koppelmedium umfasst. Das Prüfkopfsystem ist mit dem Gruppenstrahler-Gerätesystem 28, der Messdatenverarbeitung 29 und dem Bewertungssystem 30 verbunden.

Das Gruppenstrahler-Gerätesystem 28 setzt sich aus einer der Zahl der eingesetzten Prüfköpfe 3,4 entsprechenden Anzahl von Vorschaltmodulen 11 und Gruppenstrahler-Einheiten 26 zusammen. Sie sind in einem handelsüblichen Aufnahmeschrank untergebracht, das über geeignete Vorrichtungen zur Entwärmung verfügt, und über das Bussystem 21 mit der Messdatenverarbeitung 29 verbunden. Die Messdatenverarbeitung 29 besteht aus den schon erwähnten Steuer- und Auswerterechnern 20, die mit den Messdaten der jeweiligen Gruppenstrahler-Einheiten 26 gespeist werden. Mit Hilfe der Steuer- und Auswerterechner 20 werden die empfangenen, von den Gruppenstrahler-Einheiten 26 in der schon erwähnten Weise aufbereiteten Messdaten einer für die nachfolgende bildhafte Darstellung notwendigen numerischen Rekonstruktion unterzogen. Des Weiteren können damit signalverarbeitende Routinen wie Rauschunterdrückung und eine digitale Filterung durchgeführt werden. Daran angeschlossen ist das Bewertungssystem 30, über den der Prüfbefund zur Auswertung kommt. Es besteht aus einer geeigneten Zahl von Monitoren 27, auf denen eine der Anzahl der Prüfköpfe 3,4 entsprechenden Zahl von bildhaften Online-Befunddarstellungen angezeigt werden. Neben manuellen Eingabe-Hilfsmitteln wie Tastatur, Maus, Touchpanel, Joystick etc. zur interaktiven Eingabe von Befehlen und Prüfparametern kann es darüber hinaus eine Überwachungskamera zur Prüfkopfkontrolle, sowie eine Schnittstelle zum Rechnernetz des Schienenbetreibers und einen Monitor für ein ggf. vorhandenes Wirbelstromprüfsystem enthalten. Das Bewertungssystem 30 sollte in einer für den auswertenden Prüfer übersichtlichen Form angeordnet sein.

Die Funktionsweise des zuvor beschriebenen Systems ist wie folgt: Wie ausgeführt kommen je zwei Gruppenstrahler-Prüfkopfe pro Schiene und Fahrtrichtung zum Einsatz. Unter Zugrundelegung eines Winkelwertebereichs von z.B. 0°, ±35°, ±55° und ±70° ist ein Prüfsystem mit insgesamt vier Gruppenstrahlereinheiten erforderlich, die wiederum aus vier Gruppenstrahler-Modulen aufgebaut sind. Diese Anordnung ist entsprechend Fig. 4 in einem Prüfzug zusammengefasst, der über die Schienen fährt. Beispielsweise wird eine Prüftaktfolge von 10 KHz eingestellt, wodurch eine Fahrgeschwindigkeit des Schienenprüfzugs von ca. 100 km/h bei einer Ortsauflösung von ca. 3 mm erreichbar ist.

Über die jeweiligen Gruppenstrahler-Module 8 bis 10 und das Sendemodul 22 wird der jeweilige Prüfkopf 3, 4 mit Ansteuersignalen über 16 Kanäle beaufschlagt, die eine Frequenz von 3 bis 5 MHz erzeugen und, wie schon beschrieben, gegen einander verzögert sind. Dadurch wird von dem jeweiligen Prüfkopf 3, 4 ein Schallfeld in die Schiene 1 eingestrahlt, das eine Breitstrahlrichtwirkung aufweist und beispielsweise Winkelbereiche zwischen etwa 30° und 80° in Fahrtrichtung und in Gegenfahrtrichtung umfassen. Zusätzlich wird über dem Sendemodul 25 unter Ansteuerung durch den Gruppenstrahler-Modul 23 der Einzelschwinger 7 angeregt, der ein senkrechtes Schallfeld in die Schiene einstrahlt, das am Schienenfuß reflektiert wird, wobei diese Reflexion zur Feststellung der Koppelqualität dient.

Die Schallfelderreflexionen werden sowohl von den Elementen 5 als auch dem Element 7 empfangen und im Falle der 16 Schwingerelemente 5 über 16 Kanäle an den Vorschaltmodul 11 gegeben. Dieser Vorschaltmodul entkoppelt die hochfrequenten Signale voneinander und liefert die Empfangssignale an die jeweiligen Empfangsmodule 12, 13, 14 Signale über jeweils 16 Kanäle, die in den Empfangsmodulen 12 bis 14 verstärkt und sonstigen Verarbeitungen unterzogen werden. Die so verarbeiteten Echosignale der Schwingerelemente werden in den Gruppenstrahler-Modulen 8, 9, 10, wie schon beschrieben digitalisiert und messtechnisch zu Prüfdaten aufbereitet, worauf sie über die Verzögerungseinheiten und Summation für den entsprechenden Winkelwert bestimmt werden. Über die Interfacestufen werden die Daten zur weiteren Bearbeitung an die Auswerterechner 20 gegeben. Auf diese Weise können die Echosignale eines Gruppenstrahler-Prüfkopfs zeitgleich in der durch die geforderten Winkeleinstellungen gegebenen Anzahl von Gruppenstrahler-Modulen verarbeitet werden.

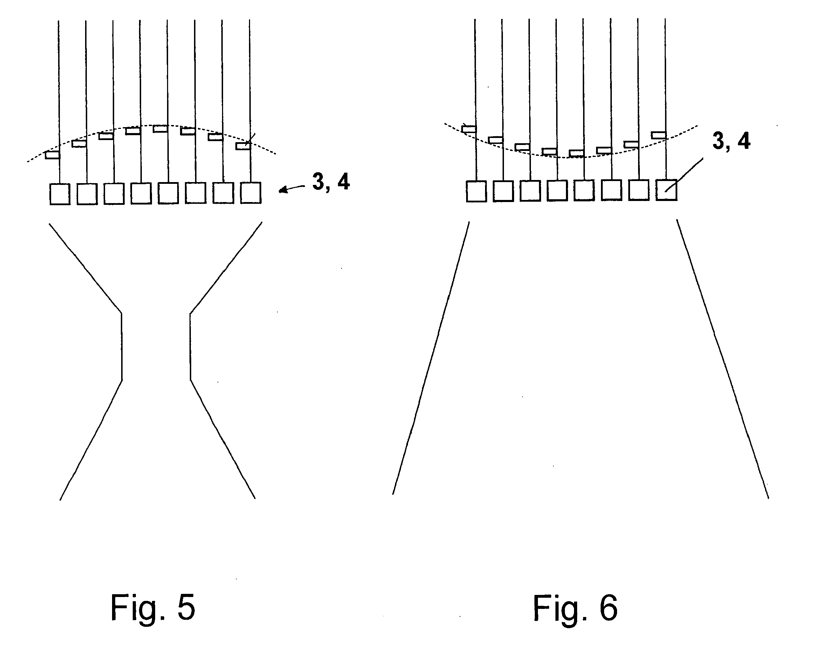

Figur 5 zeigt ein Beispiel eines fokussierten Schallfeldes, Figur 6 ein Beispiel eines defokussierten Schallfeldes.

Für die Erzeugung des Schallfeldes wird die Möglichkeit von laufzeitgesteuerten Gruppenstrahlern ausgenutzt, wobei durch eine elektronisch gesteuerte Laufzeitbelegung der Sendeimpulse die Ausbreitung des Schallbündels beeinflusst wird. Üblicherweise geschieht dies durch eine von Schwingerelement zu Schwingerelement unterschiedliche Verzögerung, die für die äußersten Elemente 0 ist und für die Mittenelemente den höchsten Wert erreicht, siehe Figur 5. Dies führt zu einer Einschnürung des Schallbündels innerhalb der Nahfeldlänge des Prüfkopfs und damit zu einer variablen Scharfstellung des Schallstrahls ("Fokussierung").

Erfindungsgemäß wird der gegenteilige Effekt ausgenutzt: Durch eine entgegengesetzt orientierte Verzögerungsbelegung, also mit Nullverzögerung bei den Mittenelementen und maximaler Verzögerung der Randelemente, wird eine künstliche Schallbündeldivergenz erzeugt, siehe Figur 6. Die Verzögerungswerte für die einzelnen Schwingerelemente werden hierzu numerisch mit Hilfe eines speziellen Rechenprogramms ermittelt.

Die dabei erreichte Breitstrahlwirkung, die - wie mit einem Prüfkopf mit 16 Elementen theoretisch ermittelt und wie messtechnisch verifiziert wurde - einen Winkelbereich von 30° bis 80° umfassen kann, wird dazu ausgenutzt, um den Schall in das gesamt zu prüfende Volumen mit einem einzigen Sendevorgang einzuleiten, d.h., innerhalb nur eines Prüftaktes. Bei der konventionellen - zeitsequentiellen - Gruppenstrahlertechnik sind hingegen dafür eine Folge von mehreren Sendevorgängen und damit mehreren Prüftakten erforderlich. Das erfindungsgemäße Verfahren, insbesondere durchgeführt mit der erfindungsgemäßen Vorrichtung, gewährleistet auf die dargestellte Weise die Prüfung von mit hoher relativer Geschwindigkeit bewegter Objekte, wie Stangen, Rohre oder Eisenbahnschienen.

Insbesondere werden in diesem Ausführungsbeispiel, wie in Figur 6 gezeigt, die Schwingerelemente der Prüfköpfe 3, 4 derart verzögert angesteuert, dass ein allen Schwingerelementen gemeinsamer virtueller Quellpunktstrahler erzeugt wird. Der Ort des Quellpunktstrahlers ist hier durch die Schnittlinien der beiden Flanken des Schallfeldes gegeben.

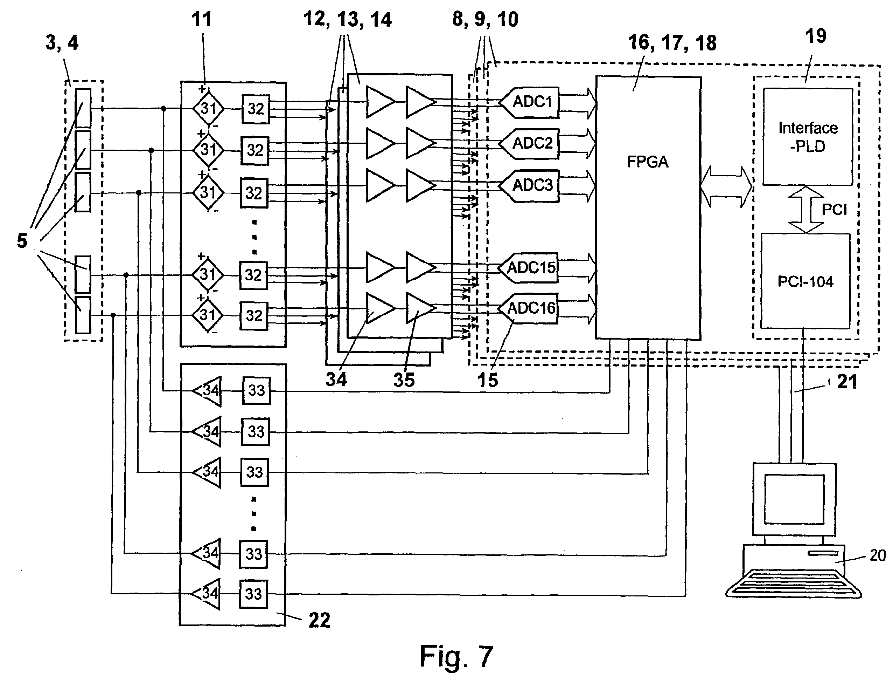

Figur 7 zeigt zusätzlich zur Figur 2 ein weiteres Blockschaltbild der in diesem Ausführungsbeispiel beschriebenen Prüfvorrichtung. Das Einzelschwingerelement 7 und die dazugehörige Steuerungselektronik 23, 24, 25 sind hier allerdings nicht mehr berücksichtigt.

Die Empfangssignale der Multielement-Prüfköpfe 3, 4 werden erfindungsgemäß über Vorschaltmodule 11 an die Empfangsmodule 12, 13, 14 der jeweiligen Gruppenstrahler-Module 8, 9, 10 geleitet, mit denen die gewünschten Winkelwerte für den Empfangsfall eingestellt werden. Die Vorschaltmodule 11 haben die Aufgabe, die Empfangssignale eines Gruppenstrahlerprüfkopfes 3, 4 zu teilen/splitten und an die ihnen zugeordneten Gruppenstrahlermodule 8, 9, 10 weiterzuleiten. Die Eingänge der einzelnen Empfangsmodule 12, 13, 14 sind dabei vorzugsweise elektrisch voneinander zu entkoppeln. Des Weiteren sind die Stufen vorzugsweise in ihrer Impedanz anzupassen und rauscharm. Aus diesem Grunde werden in diesem Ausführungsbeispiel keine aktiven Bauteile eingesetzt, was prinzipiell auch möglich wäre, sondern passive Leistungsteiler (Power-Splitter) 32 mit einer entsprechenden Zahl von Ausgängen und einer geeigneten Impedanz. Jedem dieser Bausteine 32 ist eine Entkopplungsstufe 31 vorgeschaltet, um die nachfolgenden Komponenten vor der hohen Sendespannung zu schützen.

Die Gruppenstrahlermodule 8, 9, 10 entsprechen von Aufbau und Wirkungsweise herkömmlichen Gruppenstrahler-Steuergeräten, die in Verbindung mit den Vorschaltmodulen 11 im Rahmen des erfindungsgemäßen Verfahrens eine Signalverarbeitung in Echtzeit ermöglichen.

Die Gruppenstrahlermodule 8, 9, 10 der erfindungsgemäßen Prüfvorrichtung umfassen in diesem Ausführungsbeispiel Analog-Digital-Umsetzer 15, Stufen zur Laufzeitverzögerung 16, zur Summation 17 und zur Datenkompression 18, sowie Filter und Interfacestufen 19. Die Anregung der Schwingerelemente kann durch den Sendemodul 22 durch Rechteckpulse mit Amplituden von bis zu 250V und Pulsbreiten von 20ns bis zu 2500ns erfolgen. Ein Sendemodul 22 besteht hierfür in diesem Ausführungsbeispiel aus einer Vielzahl von Treiberstufen 33 und Hochspannungs-Leistungsverstärkern 34. Damit kann der Sendeimpuls optimal an die Gegebenheiten des Schwingerelements (Frequenz, Spannungsfestigkeit, Größe) angepasst werden, was zu einer erhöhten Empfindlichkeit und damit zu einem verbesserten Signal-Rauschverhältnis führt.

Im Empfangsmodul 12, 13, 14 sorgen einstellbare, lineare und sehr rauscharme Breitbandverstärker 34, 35 für eine exakte Anpassung der Echopegel an die Dynamik der Analog-Digital-Umsetzer 15. Die geregelte Eingangsdynamik erlaubt einen Über-alles-Amplitudenbereich von 50 µVₛₛ bis 1,5 Vₛₛ. Die Bandbreite beläuft sich auf Frequenzen von 0,1 MHz bis 20 MHz, was das Spektrum der in der Praxis üblichen Prüfkopffrequenzen abdeckt. Für Anwendungen, bei denen ein laufwegabhängiger Verstärkungsausgleich erforderlich ist, kann die Verstärkung mit einer Steilheit von 40dB/µs nachgeführt werden.

Jeder Empfangskanal ist mit je einem Analog-Digital-Umsetzer 15 ausgestattet. Die Quantisierungstiefe beträgt 12 Bit bei einer Abtastrate von 100 MSPS und analogen Eingangspegeln von bis zu 2 Vₛₛ. Damit liegt die Abtastrate auch bei einer Schwingerfrequenz von 20 MHz immer noch um ein Fünffaches über der Signalfrequenz, was zu einer hohen zeitlichen Auflösung und Amplitudenstabilität führt und insbesondere keine nachgeschaltet Interpolationstechnik erfordert. Dies verringert den Aufwand bei gleichzeitigem Gewinn an Echtzeitfähigkeit.

Die nachgeordneten digitalen Signalverarbeitungs- und Steuerungsstufen sind in einem hochintegrierten programmierbaren Baustein, hier ein FPGA, untergebracht. Durch die In-circuit-Programmierbarkeit ist es möglich, die Gerätehardware durch Änderung des Quellcodes unmittelbar an veränderte Spezifikationen oder Prüfanforderungen anzupassen. Die darin enthaltenen Stufen 16 für die Laufzeitsteuerung der Schwingerelemente lassen sowohl für den Sende- und Empfangsfall einen maximalen Verzögerungswert von 20 µs zu und sind in Inkrementen von 1 ns einstellbar. Dies erfüllt die Voraussetzungen für die Steuerbarkeit von Prüfköpfen mit Frequenzen von 0,5 MHz bis zu 20 MHz.

Die den Verzögerungsstufen nachfolgenden digitalen Summationsstufen 17 setzen die Signale der einzelnen Empfangskanäle zu einem Summenwort zusammen. Diese beläuft sich hier auf 18 Bit, wobei darin ein Übersteuerungsbit enthalten ist, das das Überschreiten des maximalen oder minimalen Eingangspegels einer der Analog-Digital-Umsetzer 15 detektiert. Damit ist gewährleistet, dass Übersteuerungen sowohl der positiven wie der negativen Halbwelle in einem der Empfangskanäle erkannt und angezeigt werden, auch wenn das Summensignal keine Verzerrungen aufwiest und sich innerhalb des erlaubten Aussteuerrungsbereichs befindet. Die äußerst hohe Dynamik von 17 Bit erlaubt die nachträgliche Analyse von Signalen, selbst wenn diese nicht mit einer ausrechenden Verstärkung aufgenommen wurden und scheinbar im Rauschen "verschwinden".

Die darauf folgenden Stufen zur Datenkompression 18 erfüllen folgenden Aufgaben: Einmal soll das Summensignal im Urdatenformat, d.h., als nicht komprimiertes HF-Signal mit Stützstellen von 10 ns vorliegen. Dies ist für Anwendungen wie SAFT (Synthetic Aperture Focusing Technique) oder TOFD (Time of Flight Defraction Technique) erforderlich. Das HF-Bild wird in einem innerhalb der Prüftaktperiode frei wählbaren Zeitfenster von bis zu 1,31 ms erstellt. Dies entspricht einem Bereich von 0,03 mm bis 3,87 m bei Longitudinalwellen. Dann können sowohl eine Zweiweggleichrichtung wie auch eine Pixelierung zur Erstellung eines A-Bilds durchgeführt werden. Letzteres kann bis zu 65536 Pixel umfassen, bei einem Zeitbereich von 10 ns bis 1,31 ms bzw. 0,03 mm bis 3,87 m Laufweg für Longitudinalwelle pro Pixel, wobei jedes einzelne Pixel den Maximalwert des mit ihm erfassten Signalbereichs enthält. Darüber hinaus können für eine rasche Bewertung von Prüfbereichen noch bis zu 4 Blenden wahlfrei innerhalb des Auswertebereiches gesetzt werden. Diese ermöglichen es, die Überschreitung einer variabel einstellbaren Schwelle zu detektieren, den sich dabei ergebenden Maximalwert zu ermitteln und die Blendenüberschreitung als akustisches oder optisches Signal anzuzeigen.

Das FPGA enthält in diesem Ausführungsbeispiel auch eine digitale Filterstufe zur Optimierung der Signalintegrität. Es handelt sich um Filterstufen des Typs Infinite Impulse Response (IIR), mit denen die Bandbreite steilflankig auf den gewünschten Frequenzbereich eingegrenzt werden kann. Hoch-, Tief- und Bandpasskonfigurationen der 4. Ordnung können auf diese Weise realisiert werden.

Ein programmierbarer Baustein (PLD) fungiert zusammen mit einem Single-board PCI-104 Rechner als Schnittstelle zwischen den Gruppenstrahlermodulen 8, 9, 10 und dem Steuer- und Auswerterechner 20.

Die Anbindung an den Steuer- und Auswerterechner erfolgt hier über eine Gigabit-Ethernet Verbindung 21 unter Verwendung des TCP/IP Protokolls. Dieses serielles Bussystem wird geräteseitig über eine entsprechende Schnittstelle des PC-104 Prozessorboard angeschlossen, das in jeder der Gruppenstrahlermodulen vorhanden ist und die Interfacefunktionen für die Übertragung der Parameter- und Messdaten übernimmt.

## Patentansprüche

1. Verfahren zum Detektieren von Diskontinuitäten in einem Materialbereich mit mindestens einem, mehrere Ultraschall-Schwingerelemente aufweisenden Prüfkopf und einer Auswerte- und Steuereinrichtung, wobei die Schwingerelemente derart angeordnet und angesteuert werden, dass ein defokussierendes Schallfeld in den Materialbereich eingestrahlt wird, und dass die Empfangssignale der Schwingerelemente parallel an eine Mehrzahl zur Auswerteeinrichtung gehörenden Auswertemodulen weitergeleitet und zeitgleich für unterschiedliche Winkelwerte oder Winkelbereiche ausgewertet werden.

2. Verfahren nach Anspruch 1, **dadurch gekennzeichnet, dass** die Empfangssignale der Schwingerelemente zunächst geteilt, nach dem Teilen parallel an die Auswertemodule weitergeleitet, und dann in den Auswertemodulen für einen dort jeweils festgelegten Winkelwert oder Winkelbereich parallel ausgewertet werden.

3. Verfahren nach einem der vorhergehenden Ansprüche, **dadurch gekennzeichnet, dass** die Schwingerelemente derart angeordnet werden, dass eine feste Einschallrichtung vorgegeben wird und dass zur Erzeugung einer Breitstrahlrichtwirkung die einzelnen Schwingerelemente gegeneinander verzögert angesteuert werden.

4. Verfahren nach einem der vorhergehenden Ansprüche, **dadurch gekennzeichnet, dass** zur Erzeugung eines defokussierenden Schallfeldes die Schwingerelemente derart verzögert angesteuert werden, dass ein allen Schwingerelementen gemeinsamer virtueller Quellpunktstrahler erzeugt wird.

5. Verfahren nach einem der vorhergehenden Ansprüche, **dadurch gekennzeichnet, dass** bei der parallelen, zeitgleichen Weiterverarbeitung die Empfangssignale jeweils digitalisiert, verzögert und summiert werden, wobei der gewünschte Winkelwert oder -bereich über die entsprechende Verzögerungseinstellung vorgenannten wird, und über ein Bussystem zu einem Zentralrechner geleitet werden.

6. Verfahren nach einem der Ansprüche 1 bis 5, **dadurch gekennzeichnet, dass** ein Schallfeld zur Koppelkontrolle senkrecht in das Material eingestrahlt wird.

7. Vorrichtung zum Detektieren von Diskontinuitäten in einem Materialbereich mit mindestens einem, mehrere Ultraschall-Schwingerelemente aufweisenden Prüfkopf und eine Auswerte- und Steuereinrichtung, wobei die Steuereinrichtung (8, 22) Verzögerungselemente zur Verzögerung der Ansteuersignale der Schwingerelemente (5) für die Erzeugung eines defokussierenden Schallfeldes aufweist und dass die Empfangssignale der Schwingerelemente (5) einer Mehrzahl von zur Auswerteeinrichtung gehörenden Auswertemodulen (11, 12 - 14, 8 - 10) zuführbar sind, wobei die Auswertemodule derart ausgebildet sind, dass die Empfangssignale für einen jeweils für ein Auswertemodul festgelegten Winkelwert oder Winkelbereich parallel weiterverarbeitbar sind, und die Anzahl der Auswertemodule den unterschiedlichen Winkelwerten oder -bereichen entspricht.

8. Vorrichtung nach Anspruch 7, **dadurch gekennzeichnet, dass** die Schwingerelemente mit einem Vorschaltmodul (11) zur Verteilung der Empfangssignale verbunden sind, der mit der Mehrzahl von Auswertemodulen zur jeweiligen Weiterleitung der Empfangssignale in Verbindung steht.

9. Vorrichtung nach Anspruch 8, **dadurch gekennzeichnet, dass** das Vorschaltmodul derart ausgebildet ist, dass es die Empfangssignale teilt und parallel an die Auswertemodule weiterleitet.

10. Vorrichtung nach Anspruch 8 oder 9, **dadurch gekennzeichnet, dass** das Vorschaltmodul (11) zur Teilung der Empfangssignale einen oder mehrere passive Leistungsteiler (27) aufweist.

11. Vorrichtung nach Anspruch 7 bis Anspruch 10, **dadurch gekennzeichnet, dass** die Auswertemodule (8, 9, 10) jeweils Baugruppen (15, 16, 17) für die Digitalisierung der von dem Vorschaltmodul (11) gelieferten analogen Empfangssignale, für die Verzögerung und Winkelbestimmung und/oder für die Empfangssummation aufweisen.

12. Vorrichtung nach einem der Ansprüche 7 bis 11, **dadurch gekennzeichnet, dass** ein Sendemodul (22) zur Ansteuerung der Schwingerelemente (5) mit jeweils gegeneinander verzögerten Impulsen vorgesehen ist.

13. Vorrichtung nach Anspruch 12, **dadurch gekennzeichnet, dass** die Ansteuerung in der Weise vorgenommen wird, dass ein Breitstrahl-Schallfeld mit einem Winkelbereich in etwa zwischen 30° und 80° entsteht.

14. Vorrichtung nach einem der Ansprüche 12 bis 13, **dadurch gekennzeichnet, dass** die Steuereinrichtung derart ausgebildet ist, dass mittels den Verzögerungselementen ein allen Schwingerelementen (5) gemeinsamer virtueller Quellpunktstrahler erzeugbar ist.

15. Vorrichtung nach einem der Ansprüche 7 bis 14, **dadurch gekennzeichnet, dass** der Prüfkopf (3, 4) ein Einzelschwingerelement umfasst, das parallel zur Oberfläche des Materialbereichs orientiert ist und mit einem zugeordneten Auswertemodul (23) zur Koppelkontrolle und Detektion von horizontal angeordneten Diskontinuitäten verbunden ist.

16. Vorrichtung nach einem der Ansprüche 7 bis 15, **dadurch gekennzeichnet, dass** die Schwingerelemente (5) schräg in einem Winkel zur Oberfläche des Materialbereichs angeordnet sind.

17. Vorrichtung nach einem der Ansprüche 7 bis 16 für die Detektion von Fehlern in Schienen, **dadurch gekennzeichnet, dass** für jede Schiene (1) ein Prüfkopf (3) in Fahrtrichtung und ein Prüfkopf (4) in Gegenfahrtrichtung mit den entsprechenden Sende-, Vorschalt- und Auswertemodulen vorgesehen sind.
